# EUROPÄISCHE PATENTSCHRIFT

(11) **EP 3 325 835 B1**
(45) Veröffentlichungstag und Bekanntmachung des Hinweises auf die Patenterteilung: **20.11.2019**
(21) Anmeldenummer: 16748078.9
(22) Anmeldetag: 20.07.2016
(51) Int. Cl.: F16D 1/112, F16D 1/116, G01M 15/02, F16D 1/10

(54) **WELLENVERBINDUNGSVORRICHTUNG UND ANORDNUNG ZUR DREHVERBINDUNG EINER BELASTUNGSMASCHINE EINES PRÜFSTANDES MIT EINEM PRÜFLING**
SHAFT CONNECTION DEVICE AND ARRANGEMENT FOR THE ROTATIONAL CONNECTION OF A LOAD MACHINE OF A TEST STAND TO A TEST SUBJECT
DISPOSITIF DE RACCORDEMENT D'ARBRE ET SYSTÈME POUR RACCORDER À ROTATION UNE MACHINE DE CHARGE D'UN BANC DE TEST À UN ÉCHANTILLON

(30) Priorität: 23.07.2015 AT 4942015
(43) Veröffentlichungstag der Anmeldung: 30.05.2018
(73) Patentinhaber: AVL List GmbH, 8020 Graz (AT)
(72) Erfinder: PONGRATZ, Harald, 8010 Graz (AT); TSCHUBI, Christian, 8010 Graz (AT); TAUBENSCHUSS, Matthias, 8020 Graz (AT); WETZEL, Martin, 8010 Graz (AT); SCHOCHLOW, Andreas, 64354 Reinheim (DE)
(74) Vertreter: Patentanwälte ter Smitten Eberlein-Van Hoof Rütten Partnerschaftsgesellschaft mbB
(86) Internationale Anmeldenummer: PCT/EP2016/067237
(87) Internationale Veröffentlichungsnummer: WO 2017/013146

(56) Entgegenhaltungen:
- DE-C1- 3 802 849
- GB-A- 2 219 372
- US-A- 4 392 759
- US-A1- 2013 081 919

## Beschreibung

Die Erfindung betrifft eine Anordnung und eine Vorrichtung gemäß Oberbegriff der unabhängigen Patentansprüche. Insbesondere betrifft die Erfindung eine Anordnung zur Verbindung einer Belastungsmaschine eines Prüfstandes, insbesondere eines Motorenprüfstandes oder eines Antriebsprüfstandes mit einem Prüfling.

Als Belastungsmaschinen werden Baugruppen bezeichnet, die beispielsweise passive Belastungsmaschinen wie Wasserwirbelbremsen, Wirbelstrombremsen, Hysteresebremsen oder Magnetpulverbremsen; aktive Belastungsmaschinen wie Gleichstrommaschinen, Asynchronmaschinen oder Drehstrom-Synchronmaschinen, aber gegebenenfalls auch Drehmoment-Messeinrichtungen, Drehmomenten-Waagen, Gleichstrom-Pendelmaschinen und/oder Tachogeneratoren als Drehzahl-Messeinrichtungen umfassen können. Als Prüfling wird allgemein die zu prüfende Vorrichtung bezeichnet, die beispielsweise eine Antriebsvorrichtung, einen Verbrennungsmotor, einen Antriebsstrang und/oder ein Getriebe umfassen kann.

Anordnungen zur Verbindung von Prüflingen mit Belastungsmaschinen sind in unterschiedlichen Ausführungen bekannt und publiziert.

Herkömmliche Verbindungsanordnungen umfassen meist eine Welle, die an ihren Enden über Gleichlaufgelenke mit je einer Kupplungsvorrichtung verbunden ist, wobei die Kupplungsvorrichtungen gegebenenfalls als elastische Kupplungen ausgebildet sind. Die Kupplungsvorrichtungen selbst sind meist über Schraubverbindungen oder Flanschverbindungen fest mit der Belastungsmaschine des Prüfstands bzw. dem Prüfling verbunden.

So ist aus der US 4,392,759 eine Wellen-Nabenverbindung bekannt, bei der ein Axialsicherungselement aus der Nabe in eine entsprechende Ausnehmung an der Welle einfahrbar ist. Stifte ragen aus der Nabe in eine Kulisse einer Betätigungsvorrichtung. Durch Verfahren der Betätigungsvorrichtung mit der Kulisse entlang des Stiftes wird das Axialsicherungselement von seiner eingefahrenen in seine ausgefahrene Position bewegt und so eine Kopplung zwischen der Welle und der Nabe gelöst beziehungsweise hergestellt.

Aus der praktischen Anwendung von Prüfständen besteht eine Nachfrage nach Anordnungen zur Drehverbindung der Belastungsmaschine mit dem Prüfling, deren Drehsteifigkeit und/oder Drehdämpfung variiert werden kann. Zur grundsätzlichen Lösung dieses Problems werden derzeit Wellen mit unterschiedlichen Steifigkeiten eingesetzt. Das Umrüsten und insbesondere das Wechseln der Wellen ist jedoch bei herkömmlichen Vorrichtungen mit einem erheblichen Zeit- und Arbeitsaufwand verbunden, wobei sich der Umrüstaufwand besonders negativ auswirkt, wenn mehrere Motoren bzw. Prüflinge nacheinander mit dem Prüfstand verbunden werden sollen.

Aufgabe der Erfindung ist es nun, eine Anordnung bzw. eine Vorrichtung zur Drehverbindung der Belastungsmaschinenanschlusskomponente einer Belastungsmaschine mit der Prüflingsanschlusskomponente eines Prüflings zu schaffen, die die Nachteile des Standes der Technik überwinden. Insbesondere soll eine schnelle und unkomplizierte Umrüstung der Verbindungskomponenten ermöglicht werden.

Die erfindungsgemäße Aufgabe wird insbesondere durch die Merkmalskombinationen der unabhängigen Patentansprüche gelöst.

Gegebenenfalls umfasst die Erfindung eine Anordnung zur Drehverbindung der Belastungsmaschinenanschlusskomponente einer Belastungsmaschine eines Prüfstandes mit der Prüflingsanschlusskomponente eines Prüflings, umfassend mindestens eine entlang der Drehachse der Drehverbindung verlaufende Welle, eine zwischen der Welle und der Belastungsmaschinenanschlusskomponente der Belastungsmaschine angeordnete Belastungsmaschinenkupplungsvorrichtung zur Drehverbindung der Welle mit der Belastungsmaschinenanschlusskomponente, eine zwischen der Welle und der Prüflingsanschlusskomponente des Prüflings vorgesehene Prüflingskupplungsvorrichtung zur Drehverbindung der Welle mit der Prüflingsanschlusskomponente.

Gegebenenfalls ist vorgesehen, dass die Prüflingskupplungsvorrichtung mindestens einen mit der Prüflingsanschlusskomponente eines Prüflings verbindbaren oder verbundenen Prüflingsadapter und einen mit der Welle verbindbaren oder verbundenen Wellenadapter umfasst, dass der Prüflingsadapter und der Wellenadapter Formschlusselemente zur lösbaren und formschlüssigen Drehverbindung des Prüflingsadapters mit dem Wellenadapter umfassen, und/oder dass eine Axialverbindungsvorrichtung zur axialen Verbindung des Prüflingsadapters mit dem Wellenadapter vorgesehen ist.

Gegebenenfalls ist vorgesehen, dass die Formschlusselemente von den einander zugewandten Seiten des Wellenadapters und des Prüflingsadapters im Wesentlichen entlang der Richtung der Drehachse, also axial abstehen und zur Herstellung der formschlüssigen Drehverbindung in axialer Richtung ineinandersteckbar und zur Trennung der formschlüssigen Drehverbindung in axialer Richtung voneinander entfernbar sind.

Gegebenenfalls ist vorgesehen, dass der Prüflingsadapter und der Wellenadapter bei hergestellter formschlüssiger Drehverbindung zusammen einen Klemmsteg bilden, der zur axialen Verbindung des Prüflingsadapters mit dem Wellenadapter zwischen Klemmkörpern der Axialverbindungsvorrichtung eingeklemmt ist.

Gegebenenfalls ist vorgesehen, dass die Axialverbindungsvorrichtung bajonettverschlussartig ausgebildet ist, dass der Klemmsteg durch einen Bewegungsablauf einer axialen Bewegung und einer Drehbewegung der Axialverbindungsvorrichtung zwischen den Klemmkörpern der Axialverbindungsvorrichtung anordenbar ist, und dass die Klemmkörper als Axialsicherung gegen eine axiale Trennung des Prüflingsadapters vom Wellenadapter und als Verdrehsicherung für die bajonettverschlussartig ausgestaltete Axialverbindungsvorrichtung wirken.

Gegebenenfalls ist vorgesehen, dass der Prüflingsadapter und der Wellenadapter in axialer Richtung verlaufende Öffnungen aufweisen, dass die mindestens eine Öffnung des Prüflingsadapters mit der mindestens eine Öffnung des Wellenadapters zumindest teilweise fluchtend angeordnet ist, wenn die Formschlusselemente des Prüflingsadapters mit den Formschlusselementen des Wellenadapters zur Drehverbindung in Eingriff stehen, und/oder dass die Axialverbindungsvorrichtung mindestens ein Verbindungselement umfasst, das zur axialen Verbindung des Prüflingsadapters mit dem Wellenadapter durch die Öffnungen hindurchragen.

Gegebenenfalls ist vorgesehen, dass der Prüflingsadapter und der Wellenadapter in axialer Richtung verlaufende Öffnungen aufweisen, dass die Öffnungen des Prüflingsadapters mit den Öffnungen des Wellenadapters zumindest teilweise fluchtend angeordnet sind, wenn die Formschlusselemente des Prüflingsadapters mit den Formschlusselementen des Wellenadapters zur Drehverbindung in Eingriff stehen, dass die Axialverbindungsvorrichtung Verbindungselemente umfasst, die zur axialen Verbindung des Prüflingsadapters mit dem Wellenadapter durch die Öffnungen hindurchragen, dass die Öffnungen jeweils eine Einführfreistellung zur axialen Einführung des Verbindungselements der Axialverbindungsvorrichtung und eine Klemmstegfreistellung zur axialen Verbindung des Prüflingsadapters mit dem Wellenadapter durch Betätigen des Verbindungselements umfassen, wobei die Klemmstegfreistellung entlang eines Teilkreises um die Drehachse verläuft und insbesondere gekrümmt langlochförmig ausgebildet ist, dass die Verbindungselemente jeweils einen Schaft mit einer Schaftdicke und zwei die Schaftdicke überragende Klemmkörper aufweisen, dass die Klemmstegfreistellung quer zu ihrem Verlauf und insbesondere in radialer Richtung eine freie Breite aufweist, die größer ist als die Schaftdicke des Schafts des jeweiligen Verbindungselements aber von den beiden Klemmkörpern des Verbindungselements überragt wird, dass die Einführfreistellung größer ist als der maßgebliche Abschnitt zumindest einer der beiden Klemmkörper oder beider Klemmkörper des Verbindungselements, sodass die Verbindungselemente der Axialverbindungsvorrichtung bajonettverschlussartig in axialer Richtung in die Einführfreistellungen der Öffnungen einführbar, entlang des Verlaufs der Klemmstegfreistellungen der Öffnungen um die Drehachse verdrehbar, und durch Einklemmen des Klemmstegs zwischen den Klemmkörpern fixierbar sind.

Gegebenenfalls ist vorgesehen, dass die Verbindungselemente jeweils eine Schraubverbindung umfassen, wobei der Schaft des Verbindungselements ein Schraubenschaft ist, der in zumindest einen der beiden Klemmkörper eingeschraubt oder einschraubbar ist, und dass der Abstand und die Klemmkraft zwischen den beiden Klemmkörpern durch Veränderung der Einschraubtiefe veränderbar ist.

Gegebenenfalls ist vorgesehen, dass die Axialverbindungsvorrichtung einen Bajonettring umfasst, über den die Verbindungselemente der Axialverbindungsvorrichtung miteinander verbunden sind.

Gegebenenfalls ist vorgesehen, dass die Formschlusselemente des Prüflingsadapters im Wesentlichen eine funktionale Negativform der Formschlusselemente des Wellenadapters aufweisen, wobei die Formschlusselemente des Prüflingsadapters und die Formschlusselemente des Wellenadapters zusammen eine im Wesentlichen spielfreie, formschlüssige Drehverbindung bilden oder eine im Wesentlichen in beide Drehrichtungen spielfreie, formschlüssige Drehverbindung bilden.

Gegebenenfalls ist vorgesehen, dass die Prüflingskupplungsvorrichtung zur Anbindung an die Welle eine flexible Wellenverbindung, ein Kreuzgelenk oder ein Gleichlaufgelenk aufweist.

Gegebenenfalls betrifft die Erfindung eine Anordnung und insbesondere ein System umfassend eine Anordnung wobei mehrere Wellen mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung mit der Prüflingskupplungsvorrichtung einsetzbar sind.

Gegebenenfalls ist vorgesehen, dass mehrere Wellen mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung mit der Prüflingskupplungsvorrichtung einsetzbar sind, und dass die Wellen jeweils mit einem Wellenadapter verbunden sind.

Gegebenenfalls ist vorgesehen, dass mehrere Prüflinge vorgesehen sind, die jeweils mit einem Prüflingsadapter verbunden sind, wobei die Prüflinge und deren Prüflingsadapter wahlweise durch Verbinden mit dem Wellenadapter mit der Belastungsmaschine verbindbar sind.

Gegebenenfalls ist vorgesehen, dass die Formschlusselemente aller Wellenadapter zur formschlüssigen Drehverbindung mit den Formschlusselementen aller Prüflingsadapter geeignet und eingerichtet sind.

Gegebenenfalls ist vorgesehen, dass die Anordnung oder das System eine Belastungsmaschine eines Prüfstandes oder eines Motorenprüfstandes umfasst.

Die Erfindung umfasst eine Wellenverbindungsvorrichtung zur formschlüssigen Drehverbindung einer Nabe mit einer Welle, wobei die Wellenverbindungsvorrichtung eine formschlüssig wirkende Welle-Nabe-Verbindung umfasst, wobei die Welle-Nabe-Verbindung einen axialen Freiheitsgrad zum Einführen eines Wellenabschnitts der Welle in die Nabe und zum Entfernen des Wellenabschnitts der Welle aus der Nabe aufweist, wobei die Wellenverbindungsvorrichtung mindestens ein Axialsicherungselement zur axialen Sicherung der Welle-Nabe-Verbindung umfasst, wobei das Axialsicherungselement eine ausgefahrene Stellung aufweist, in der es in eine Axialsicherungsöffnung ragt, wodurch der axiale Freiheitsgrad der Welle-Nabe-Verbindung gesperrt ist, und wobei das Axialsicherungselement eine zurückgezogene Stellung aufweist, in der der axiale Freiheitsgrad der Welle-Nabe-Verbindung freigegeben ist.

Des Weiteren umfasst die Wellenverbindungsvorrichtung eine Betätigungsvorrichtung zur Betätigung des Axialsicherungselements, wobei die Betätigungsvorrichtung in einer Offenstellung verrastbar ist, in der das Axialsicherungselement in seine zurückgezogene Stellung bringbar oder gebracht ist, und die Betätigungsvorrichtung in einer Geschlossenstellung verrastbar ist, in der das Axialsicherungselement in seine ausgefahrene Stellung bringbar oder gebracht ist.

Zusätzlich umfasst die Betätigungsvorrichtung mindestens eine Rastnase, mindestens zwei Rastausnehmungen, einen starr mit der Nabe verbundenen Anschlagkörper, und ein gegenüber dem Anschlagkörper bewegbares und durch Einführen der Rastnase in eine der Rastausnehmung gegenüber dem Anschlagkörper verrastbares Betätigungselement, wobei die Betätigungsvorrichtung in ihrer Offenstellung verrastet ist, wenn die Rastnase in einer der beiden zugeordneten Rastausnehmungen angeordnet ist, und wobei die Betätigungsvorrichtung in ihrer Geschlossenstellung verrastet ist, wenn die Rastnase in der anderen der beiden zugeordneten Rastausnehmungen angeordnet ist.

Gegebenenfalls ist vorgesehen, dass die Rastnase und die Rastausnehmungen im Wesentlichen entlang einer axialer Richtung verlaufen, und dass, wenn die Rastnase in eine der Rastausnehmungen eingeführt ist, das Betätigungselement und der Anschlagkörper einen axialen Freiheitsgrad gegenübereinander aufweisen, aber eine Verdrehung des Betätigungselements gegenüber dem Anschlagkörper im Wesentlichen gehemmt, insbesondere formschlüssig gehemmt ist.

Gegebenenfalls ist vorgesehen, dass die Betätigungsvorrichtung zum Wechsel zwischen der Offenstellung und der Geschlossenstellung eine Zwischenstellung aufweist, in der die Rastnase außerhalb der Rastausnehmungen angeordnet ist, dass das Betätigungselement in der Zwischenstellung gegenüber dem Anschlagkörper einen Drehfreiheitsgrad aufweist, und dass die Rastnase zur Verrastung der Betätigungsvorrichtung in der Offenstellung oder in der Geschlossenstellung wahlweise in eine der zugeordneten Rastausnehmungen einführbar oder eingeführt ist.

Gegebenenfalls ist vorgesehen, dass die Betätigungsvorrichtung ein axial wirkendes elastisches Element, wie insbesondere eine Druckfeder aufweist, dessen Kraft das Betätigungselement gegen den Anschlagkörper und gegebenenfalls die Rastnase in eine Rastausnehmung drückt und dessen Kraft einer Bewegung des Betätigungselements von einer verrasteten Stellung in die Zwischenstellung entgegenwirkt.

Gegebenenfalls ist vorgesehen, dass die Betätigungsvorrichtung mindestens eine Steuerfläche zur Bewegung des Axialsicherungselements von seiner zurückgezogenen Stellung in die ausgefahrene Stellung durch Bewegung der Betätigungsvorrichtung von der Offenstellung in die Geschlossenstellung aufweist.

Gegebenenfalls ist vorgesehen, dass die Steuerfläche am Betätigungselement vorgesehen ist, dass die Steuerfläche entlang der axialen Richtung schräg nach innen verläuft und insbesondere der Form eines Innenkegelrings entspricht, und dass sich das Axialsicherungselement je nach axialer Position des Betätigungselements in seiner ausgefahrenen Stellung oder in seiner zurückgezogenen Stellung befindet.

Gegebenenfalls ist vorgesehen, dass die Rastausnehmungen beabstandet voneinander entlang des Drehfreiheitsgrades des Betätigungselements angeordnet sind, und/oder dass eine Rastausnehmung entlang der axialen Richtung tiefer ausgebildet ist als eine andere Rastausnehmung.

Gegebenenfalls ist vorgesehen, dass mehrere Axialsicherungselemente in radialer Richtung in der Nabe oder jeweils in einer in der Nabe angeordneten Gleitbuchse geführt angeordnet sind und in ihrer ausgefahrenen Stellung von der Nabe radial nach innen, und zur axialen Sicherung in eine in der Welle vorgesehene ringnutförmige Axialsicherungsöffnung oder in mehrere Axialsicherungsöffnungen ragen.

Gegebenenfalls umfasst die Erfindung eine Anordnung zur Drehverbindung der Belastungsmaschinenanschlusskomponente einer Belastungsmaschine mit der Prüflingsanschlusskomponente eines Prüflings, umfassend mindestens eine entlang der Drehachse der Drehverbindung verlaufende Welle, eine zwischen der Welle und der Belastungsmaschinenanschlusskomponente der Belastungsmaschine angeordnete Belastungsmaschinenkupplungsvorrichtung zur Drehverbindung der Welle mit der Belastungsmaschinenanschlusskomponente, eine zwischen der Welle und der Prüflingsanschlusskomponente des Prüflings vorgesehene Prüflingskupplungsvorrichtung zur Drehverbindung der Welle mit der Prüflingsanschlusskomponente, wobei die Belastungsmaschinenkupplungsvorrichtung und/oder gegebenenfalls die Prüflingskupplungsvorrichtung zur formschlüssigen Drehverbindung mit der Welle eine Wellenverbindungsvorrichtung gemäß der gegenständlichen Beschreibung umfasst.

Gegebenenfalls ist vorgesehen, dass die Belastungsmaschinenkupplungsvorrichtung eine elastische Kupplung umfasst, oder dass die Belastungsmaschinenkupplungsvorrichtung eine entlang des Kraftflusses des Messstrangs zwischen der Nabe und der Belastungsmaschinenanschlusskomponente der Belastungsmaschine angeordnete elastische Kupplung umfasst.

Gegebenenfalls ist vorgesehen, dass die Welle-Nabe-Verbindung als Kerbverzahnung, Keilwellenverbindung oder Zahnwellenverbindung ausgebildet ist.

Gegebenenfalls ist vorgesehen, dass die Welle in der Nabe über eine Passung, insbesondere über eine Doppelpassung axial zentriert ist, und insbesondere dass sowohl der Wellenzapfen der Welle als auch eine entfernt vom Wellenzapfen angeordnete Wellenschulter über eine entsprechende Passung im Bereich der Nabe zentriert sind, oder dass die Welle beidseitig der Welle-Nabe-Verbindung zentriert ist.

Gegebenenfalls ist vorgesehen, dass die Prüflingskupplungsvorrichtung mindestens einen mit der Prüflingsanschlusskomponente eines Prüflings verbindbaren oder verbundenen Prüflingsadapter und einen mit der Welle verbindbaren oder verbundenen Wellenadapter umfasst, dass der Prüflingsadapter und der Wellenadapter Formschlusselemente zur lösbaren und formschlüssigen Drehverbindung des Prüflingsadapters mit dem Wellenadapter umfassen, und dass eine Axialverbindungsvorrichtung zur axialen Verbindung des Prüflingsadapters mit dem Wellenadapter vorgesehen ist.

Gegebenenfalls ist vorgesehen, dass mehrere Wellen mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung mit der Prüflingskupplungsvorrichtung einsetzbar sind.

Gegebenenfalls ist das Betätigungselement der Betätigungsvorrichtung in allen Ausführungsformen als werkzeuglos betätigbares Betätigungselement und insbesondere als manuell betätigbares Betätigungselement ausgebildet.

Gegebenenfalls wird eine als System bezeichenbare Anordnung vorgeschlagen, die zumindest eine Welle, eine Belastungsmaschinenkupplungsvorrichtung zur Drehverbindung der Welle mit der Belastungsmaschinenanschlusskomponente der Belastungsmaschine und eine Prüflingskupplungsvorrichtung zur Drehverbindung der Welle mit der Prüflingsanschlusskomponente des Prüflings umfasst, wobei die Welle die Prüflingskupplungsvorrichtung und die Belastungsmaschinenkupplungsvorrichtung verbindet.

Bevorzugt umfasst das System bzw. die Anordnung mehrere Wellen mit unterschiedlichen Steifigkeits- und/oder Dämpfungseigenschaften, die wahlweise zur Verbindung der Belastungsmaschinenkupplungsvorrichtung mit der Prüflingskupplungsvorrichtung eingesetzt werden können, um die Elastizität, die Resonanzparameter oder die Dämpfungseigenschaft des Messstrangs des Prüfstandsaufbaus an die jeweiligen Anforderungen anpassen zu können.

Gegebenenfalls umfasst das System bzw. die Anordnung mehrere Prüflingsadapter, die jeweils mit einem Prüfling verbunden werden können oder sind und die bevorzugt an die Prüflingsanschlusskomponente des Prüflings angepasst sind. Dadurch können mehrere Prüflinge für die Verbindung mit der Belastungsmaschine des Prüfstands vorbereitet sein und über wenige Handgriffe mit der Belastungsmaschine verbunden werden.

Auch ein Tausch der Welle ist durch die erfindungsgemäße Anordnung bzw. das erfindungsgemäße System erleichtert, da in bevorzugter Weise die Anschlussstücke der Welle an die Belastungsmaschinenkupplungsvorrichtung und an die Prüflingskupplungsvorrichtung standardisiert oder gleich ausgebildet ist. So weisen bevorzugt alle Prüflingsadapter dieselbe Anschlussgeometrie zur Verbindung mit dem oder den Wellenadapter(n) auf. Bevorzugt weisen alle Wellen dieselbe Anschlussgeometrie zur Verbindung mit der Prüflingskupplungsvorrichtung auf. Gegebenenfalls weist jede Welle einen eigenen Wellenadapter auf.

Gegebenenfalls ist vorgesehen, dass die elastische Kupplung auswechselbar oder dauerhaft mit der Belastungsmaschinenanschlusskomponente der Belastungsmaschine verbunden ist.

Bevorzugt ist vorgesehen, dass die Belastungsmaschinenkupplungsvorrichtung eine Wellenverbindungsvorrichtung umfasst, die als Schnellwechselsystem ausgebildet ist. Dazu ist eine Welle-Nabe-Verbindung vorgesehen, die zwar in Drehrichtung formschlüssig wirkt, jedoch einen axialen Freiheitsgrad zum Einführen der Welle oder zum Entfernen der Welle aufweist. Dieser axiale Freiheitsgrad kann durch Axialsicherungselemente gesperrt werden. Dazu weisen die Axialsicherungselemente eine ausgefahrene Stellung auf, in der sie in eine Axialsicherungsöffnung ragen, um den axialen Freiheitsgrad zu sperren und insbesondere, um den axialen Freiheitsgrad formschlüssig zu sperren.

Zur Betätigung der Axialsicherungselemente ist bevorzugt eine Betätigungsvorrichtung vorgesehen, die eine Offenstellung und eine Geschlossenstellung aufweist. Die Betätigungsvorrichtung ist gegebenenfalls derart ausgestaltet, dass ein Indikator vorgesehen ist, der anzeigt, ob sich die Betätigungsvorrichtung, und damit auch die Wellenverbindungsvorrichtung, in ihrer Offenstellung oder in ihrer Geschlossenstellung befinden. Der Indikator ist bevorzugt durch eine Rastnase und/oder durch eine Rastausnehmung gebildet.

Erfindungsgemäß ist insbesondere vorgesehen, dass die Betätigungsvorrichtung in ihrer Offenstellung und in ihrer Geschlossenstellung verrastbar ist, sodass sie ohne Zutun von außen in der jeweiligen Stellung verharrt, insbesondere bis die Stellung durch aktives Eingreifen einer Bedienperson verändert wird. Zur Betätigung der Betätigungsvorrichtung und zur Veränderung der Stellung ist insbesondere ein Betätigungselement vorgesehen. Dieses Betätigungselement weist eine Steuerfläche auf, die dazu eingerichtet ist, bei Bewegung des Betätigungselements die Axialsicherungselemente von ihrer zurückgezogenen Stellung in ihre ausgefahrene Stellung oder von ihrer ausgefahrenen Stellung in ihre zurückgezogene Stellung zu bewegen. Gegebenenfalls wird nur das Ausfahren oder das Zurückziehen aktiv durch das Betätigungselement bewirkt, wobei die jeweils andere Bewegung durch ein elastisches Element, wie beispielsweise durch eine vorspannbare oder vorgespannte Feder bewirkt wird. Gegebenenfalls ist in allen Ausführungsformen vorgesehen, dass das Betätigungselement ringförmig und insbesondere die Nabe ringförmig umgebend ausgebildet ist. Das Betätigungselement ist bevorzugt axial und rotatorisch geführt, wobei der rotatorische Freiheitsgrad des Betätigungselements bei in einer Rastausnehmung eingeführter Rastnase gesperrt ist. Bei in einer Rastausnehmung eingeführter Rastnase ist eine Verdrehung des Betätigungselements bevorzugt formschlüssig gesperrt. Gegebenenfalls ist vorgesehen, dass die Belastungsmaschinenkupplungsvorrichtung eine mit der Belastungsmaschinenanschlusskomponente des Prüfstands fest verbundene Elastikkupplung ist, an der die Wellenverbindungsvorrichtung vorgesehen ist.

Gegebenenfalls ist vorgesehen, dass entlang des Verlaufs des Anschlagkörpers oder des Betätigungselements mehrere Rastnasen vorgesehen sind, wobei bevorzugt jeder Rastnase zwei Rastausnehmungen zugeordnet sind.

Gemäß einer bevorzugten Ausführungsform der Anordnung ist vorgesehen, dass das Drehmoment entlang des Messstrangs, ausgehend von dem Prüfling, nacheinander von der Prüflingsanschlusskomponente des Prüflings, dem Prüflingsadapter, dem Wellenadapter, gegebenenfalls einem Gleichlaufgelenk, der Welle, der Welle-Nabe-Verbindung der Wellenverbindungsvorrichtung, gegebenenfalls einer elastischen Kupplung und dann auf die Belastungsmaschinenanschlusskomponente der Belastungsmaschine übertragen wird, sodass diese Komponenten entlang des Kraftflusses nacheinander angeordnet sind. Der Kraftfluss läuft bevorzugt in dieser Reihenfolge direkt über die genannten Komponenten. Gegebenenfalls geht der Kraftfluss von der Belastungsmaschine aus und verläuft folglich in die entgegengesetzte Richtung entlang der genannten Komponenten.

Gegebenenfalls ist vorgesehen, dass die Wellenverbindungsvorrichtung und insbesondere deren Welle-Naben-Verbindung für die Drehmomentklassen 150Nm, 300Nm, 600Nm, 900Nm und/oder 1500 Nm (bei 8000rpm-10000rpm) ausgelegt sind Bevorzugt ist die Nabe aus legiertem Vergütungsstahl mit einer Festigkeit von mehr als 1400N/mm² gefertigt. Die Oberfläche der verschiebbaren Teile der Wellenverbindungsvorrichtung weisen bevorzugt eine Härte von mehr als 55HRC auf.

Bevorzugt umfasst die Prüflingskupplungsvorrichtung zur Drehverbindung des Prüflingsadapters mit dem Wellenadapter Formschlusselemente. Bevorzugt wird das Drehmoment vom Prüflingsadapter auf den Wellenadapter ausschließlich über diese Formschlusselemente übertragen. Um zu verhindern, dass sich die Formschlusselemente in axialer Richtung voneinander trennen, ist eine Axialverbindungsvorrichtung vorgesehen. Bevorzugt ist diese Axialverbindungsvorrichtung bajonettartig ausgebildet oder bajonettartig bedienbar und mit einer Verdrehsicherung versehen. Die Formschlusselemente wirken bevorzugt wie Klauen einer Klauenkupplung, wie Klauen einer in beide Drehrichtungen wirkenden Klauenkupplung oder wie Klauen einer in beide Richtungen unelastisch wirkenden Klauenkupplung.

Die Welle-Nabe-Verbindung ist zur formschlüssigen Drehverbindung der Welle mit der Nabe eingerichtet, wobei bevorzugt die Übertragung des Drehmoments ausschließlich über die Welle-Nabe-Verbindung geschieht. Um zu verhindern, dass die Welle aus der Welle-Nabe-Verbindung gezogen werden kann, sind Axialsicherungselemente vorgesehen. Diese Axialsicherungselemente sind jedoch bevorzugt ausschließlich zur axialen Halterung der Welle in der Nabe und nicht zur Übertragung des Drehmoments eingerichtet. Bevorzugt ist die Nabe in einer elastischen Kupplung gehaltert, womit sowohl eine gewisse Drehelastizität, als auch eine gewisse Toleranz der axialen Abweichung des Verlaufs der Welle ermöglicht ist.

Gegebenenfalls können sowohl an der Belastungsmaschinenkupplungsvorrichtung als auch an der Prüflingskupplungsvorrichtung elastische Gelenke, wie beispielsweise Gleichlaufgelenke vorgesehen sein. Gegebenenfalls können sowohl die Belastungsmaschinenkupplungsvorrichtung als auch die Prüflingskupplungsvorrichtung eine elastische Kupplung umfassen. Als elastische Kupplung wird insbesondere eine Drehelastische Kupplung, wie beispielsweise eine drehelastisch gelagerte Elastomerkupplung bezeichnet.

Bevorzugt weist die Welle-Nabe-Verbindung der Wellenverbindungsvorrichtung eine Doppelpassung auf, wodurch die Ausrichtung der Achse der Welle gegenüber der Achse der Nabe festgelegt ist. Dabei ist bevorzugt beidseitig des in der Nabe angeordneten Wellenabschnitts der Welle ein Zentrierbereich vorgesehen, wobei die Zentrierbereiche mit einer Passung in entsprechenden Zentrierbereichen der Nabe angeordnet sind. Die Nabe kann in dieser Ausführungsform an einer elastischen Kupplung vorgesehen sein, um insbesondere eine geringfügige Achsabweichung kompensieren zu können. Am anderen Ende der Welle kann beispielsweise ein Gleichlaufgelenk vorgesehen sein. Durch diese Konfiguration ist ferner ermöglicht, dass lediglich ein Gleichlaufgelenk bzw. ein elastisches Gelenk vorgesehen sein muss, wobei an der anderen Kupplung bevorzugt eine elastische Kupplung vorgesehen ist.

In weiterer Folge wird die Erfindung anhand der Figuren weiter beschrieben, wobei Fig. 1 eine schematische Seitenansicht einer erfindungsgemäßen Anordnung bzw. eines erfindungsgemäßen Systems, Fig. 2 eine schematische Schnittdarstellungen einer Wellenverbindungsvorrichtung, Fig. 3 unterschiedliche Stellungen einer Wellenverbindungsvorrichtung, Fig. 4 eine schematische Schrägansicht eines Teils der Anordnung und insbesondere die Prüflingskupplungsvorrichtung, Fig. 5 eine Schnittdarstellung der schematischen Ansicht der Prüflingskupplungsvorrichtung und Fig. 6 die Funktion der Axialverbindungsvorrichtung zeigen.

Wenn nicht anders angegeben, so entsprechen die Bezugszeichen folgenden Komponenten: Belastungsmaschinenanschlusskomponente 1, Belastungsmaschine 2, Prüflingsanschlusskomponente 3, Prüfling 4, Drehachse 5, Welle 6, Belastungsmaschinenkupplungsvorrichtung 7, Prüflingskupplungsvorrichtung 8, Prüflingsadapter 9, Wellenadapter 10, Formschlusselement 11, Axialverbindungsvorrichtung 12, Klemmsteg 13, Klemmkörper 14, Öffnung 15, Verbindungselement 16, Klemmstegfreistellung 17, Schaft 18, Einführfreistellung 19, Bajonettring 20, Wellenverbindungsvorrichtung 21, Nabe 22, Axialsicherungselement 23, Axialsicherungsöffnung 24, Betätigungsvorrichtung 25, Rastnase 26, Rastausnehmung 27, Anschlagkörper 28, Betätigungselement 29, elastisches Element 30, Steuerfläche 31, elastische Kupplung 32.

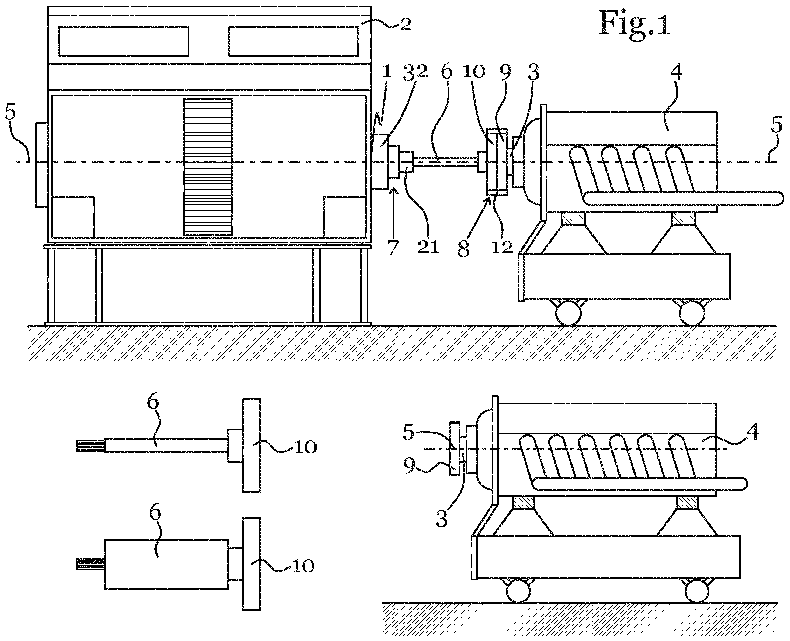

Fig. 1 zeigt eine schematische Seitenansicht einer erfindungsgemäßen Anordnung bzw. eines erfindungsgemäßen Systems das eine erfindungsgemäße Anordnung enthält. Die Anordnung umfasst eine Belastungsmaschinenkupplungsvorrichtung 7 zur Verbindung einer Welle 6 mit der Belastungsmaschinenanschlusskomponente 1 einer Belastungsmaschine 2. Ferner umfasst die Anordnung eine Prüflingskupplungsvorrichtung 8 zur Verbindung der Welle 6 mit der Prüflingsanschlusskomponente 3 eines Prüflings 4. Gegebenenfalls umfasst die Anordnung auch die Belastungsmaschine 2 und/oder den Prüfling 4. Die Anordnung oder das System umfasst bevorzugt mehrere Wellen 6, die unterschiedliche physikalische Eigenschaften wie beispielsweise unterschiedliche Steifigkeiten aufweisen können.

Die Belastungsmaschinenkupplungsvorrichtung 7 umfasst bevorzugt eine Wellenverbindungsvorrichtung 21 und gegebenenfalls eine elastische Kupplung 32. Die Prüflingskupplungsvorrichtung 8 umfasst bevorzugt einen Wellenadapter 10, einen Prüflingsadapter 9 und eine Axialverbindungsvorrichtung 12. Ferner kann das System oder die Anordnung einen weiteren Prüfling 4 umfassen, der bevorzugt ebenfalls mit einem Prüflingsadapter 9 versehen ist, sodass die Prüflinge wahlweise mit ihrem Prüflingsadapter 9 an die Belastungsmaschine 2 und insbesondere an den Wellenadapter 10 angeschlossen werden können. Gegebenenfalls sind auch die auswechselbaren Wellen 6 jeweils mit einem Wellenadapter 10 versehen. Bevorzugt ist die Anordnung bzw. das System derart ausgestaltet, dass alle Wellenadapter 10 mit allen Prüflingsadaptern 9 verbindbar sind. Bevorzugt weisen die Wellen einen Abschnitt zur Verbindung mit der Nabe 22 der Wellenverbindungsvorrichtung 21 auf. Bevorzugt sind diese Wellenabschnitte aller Wellen 6 gleich oder formident ausgebildet, sodass die Wellen wahlweise über die Wellenverbindungsvorrichtung 21 mit der Belastungsmaschine 2 verbunden und ausgetauscht werden können.

Das vorliegende System bzw. die vorliegende Anordnung ermöglicht eine schnelle, effiziente Wechselbarkeit der Prüflinge 4 und der Wellen 6. So können zur Lösung der erfindungsgemäßen Aufgabe unterschiedliche Prüflinge 4 und unterschiedliche Wellen 6 nacheinander oder wahlweise mit der Belastungsmaschine 2 verbunden werden, wobei die Umrüstzeit und die Handhabbarkeit verbessert sind.

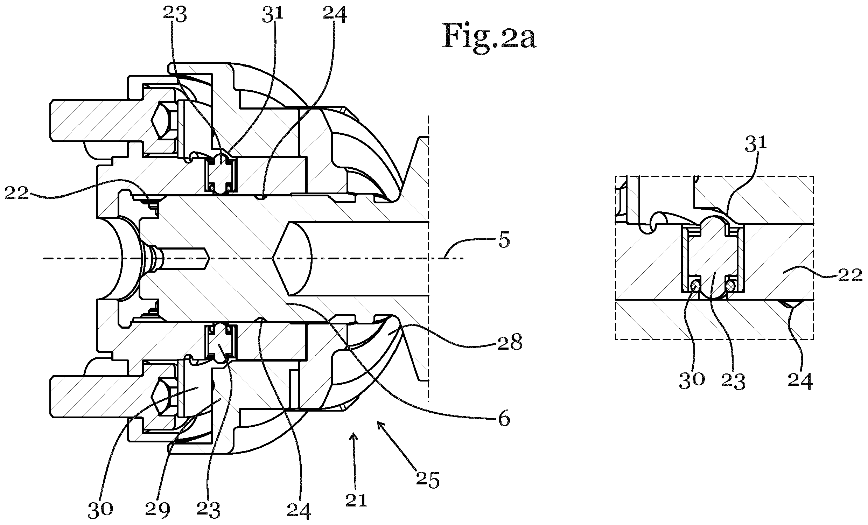

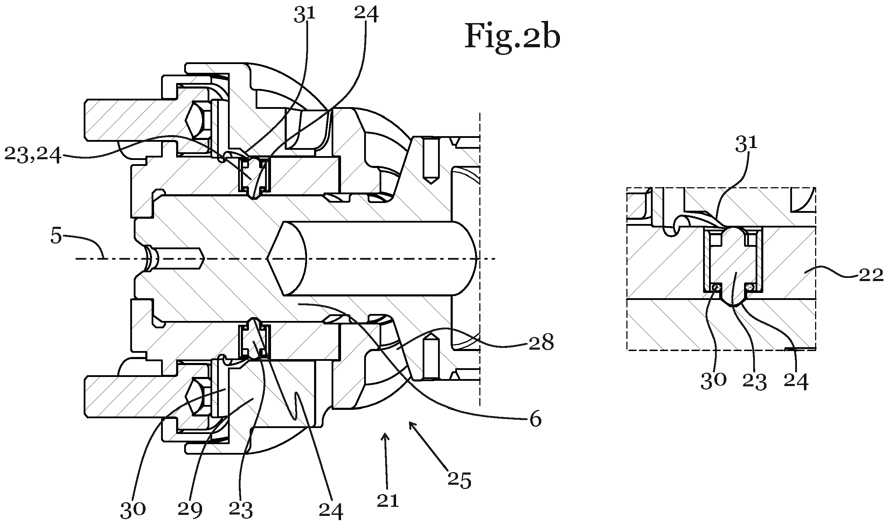

Fig. 2 zeigt zwei schematische Schnittdarstellungen einer Wellenverbindungsvorrichtung 21 in unterschiedlichen Stellungen, wobei Fig. 2a die Wellenverbindungsvorrichtung 21 in ihrer Offenstellung zeigt, in der eine Welle 6 in axialer Richtung, d.h. entlang der Drehachse 5 in die Nabe 22 eingeführt werden kann, oder aus der Nabe ausgezogen werden kann. Fig. 2b zeigt dieselbe Wellenverbindungsvorrichtung wie Fig. 2a, jedoch in der Geschlossenstellung, in der der axiale Freiheitsgrad der Welle-Nabe-Verbindung gesperrt ist, sodass die Welle 6 in der Wellenverbindungsvorrichtung 21 axial gesichert ist.

Die Wellenverbindungsvorrichtung 21 ist zur formschlüssigen Drehverbindung einer Welle 6 mit einer Nabe 22 geeignet und/oder eingerichtet. Die Welle-Nabe-Verbindung ist in allen Ausführungsformen bevorzugt als formschlüssige Drehverbindung, insbesondere als Keilwellenanordnung, als Welle-Nabe-Verbindung mit Kerbverzahnung oder als Zahnwellenverbindung ausgebildet. Diese Welle-Nabe-Verbindung umfasst bevorzugt einen axialen Freiheitsgrad, sodass die Welle 6 oder zumindest ein Abschnitt der Welle 6 in die Nabe 22 eingeführt oder aus der Nabe 22 entfernt werden kann. Zur axialen Sicherung des Wellenabschnitts der Welle 6 in der Wellenverbindungsvorrichtung 21 ist zumindest ein Axialsicherungselement 23 vorgesehen, das zur Sperrung des axialen Freiheitsgrades der Welle-Nabe-Verbindung in eine Axialsicherungsöffnung 24 ragt. In allen Ausführungsformen sind bevorzugt mehrere Axialsicherungselemente 23 vorgesehen. Diese können beispielsweise in eine ringförmig angeordnete Axialsicherungsöffnung 24 ragen. Gegebenenfalls sind mehrere Axialsicherungsöffnungen 24 vorgesehen, die derart ausgestaltet sind, dass je ein Axialsicherungselement 23 oder mehrere Axialsicherungselemente 23 in je eine der Axialsicherungsöffnungen 24 ragen kann oder können, um den axialen Freiheitsgrad der Welle-Nabe-Verbindung zu sperren. Bevorzugt sind die Axialsicherungsöffnungen 24 in allen Ausführungsformen durch eine Ringnut und bevorzugt durch eine einzige Ringnut gebildet, die insbesondere im Bereich des in der Nabe 22 aufgenommenen Wellenabschnitts vorgesehen ist, sodass keine exakte Drehausrichtung der Axialsicherungsöffnungen 24 gegenüber den Axialsicherungselementen 23 erfolgen muss.

Bevorzugt sind die Axialsicherungselemente 23 bewegbar und insbesondere geführt oder in einer Gleitbuchse geführt in der Nabe 22 angeordnet. Die Axialsicherungselemente 23 weisen eine ausgefahrene Stellung auf, in der sie die Nabe nach innen überragen, um beispielsweise in die Axialsicherungsöffnungen 24 der Welle 6 eingeführt zu werden. Ferner weisen die Axialsicherungselemente 23 eine zurückgezogene Stellung auf, in der sie derart in die Nabe 22 zurückgezogen sind, dass der axiale Freiheitsgrad der Welle-Nabe-Verbindung freigegeben ist.

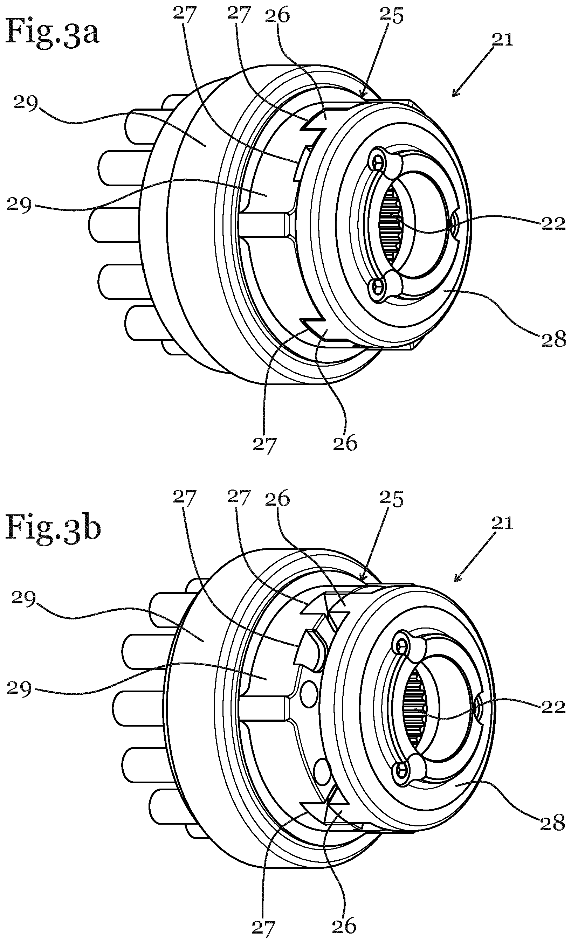

Zur Bewegung bzw. zur Betätigung der Axialsicherungselemente 23 ist eine Betätigungsvorrichtung 25 vorgesehen. Die Betätigungsvorrichtung 25 umfasst eine Offenstellung, in der sich die Axialsicherungselemente 23 bevorzugt in ihrer zurückgezogenen Stellung befinden. Ferner umfasst die Betätigungsvorrichtung 25 eine Geschlossenstellung, in der sich die Axialsicherungselemente 23 bevorzugt in ihrer ausgefahrenen Stellung befinden. Bevorzugt ist in allen Ausführungsformen vorgesehen, dass die Betätigungsvorrichtung 25 sowohl in ihrer Offenstellung als auch in ihrer Geschlossenstellung verrastbar ist, sodass die Betätigungsvorrichtung 25 insbesondere nicht selbsttätig von der Offenstellung in die Geschlossenstellung oder von der Geschlossenstellung in die Offenstellung wechseln kann. Die Funktion der Verrastung wird insbesondere in den Figuren 3a bis 3d beschrieben.

Die Betätigungsvorrichtung 25 umfasst bevorzugt einen Anschlagkörper 28 und ein gegenüber dem Anschlagkörper 28 bewegbares und verrastbares Betätigungselement 29. Der Anschlagkörper 28 ist bevorzugt starr mit der Nabe 22 verbunden. Ferner umfasst die Wellenverbindungsvorrichtung 21 bevorzugt ein elastisches Element 30, das zur Ausübung einer Kraft eingerichtet und beispielsweise als Druckfeder, Zugfeder oder ähnliches Element ausgebildet ist. Das elastische Element 30 wirkt auf das Betätigungselement 29 und drückt das Betätigungselement 29 bevorzugt an den Anschlagkörper 28. Durch die elastische Ausgestaltung des elastischen Elements 30 und durch einen gewissen Bewegungsspielraum des Betätigungselements 29, kann das Betätigungselement 29 in axialer Richtung gegen die Kraft des elastischen Elements 30 bewegt werden. Insbesondere kann das Betätigungselement 29 in allen Ausführungsformen derart gegen die Kraft des elastischen Elements 30 bewegt werden, dass die Verrastung der Betätigungsvorrichtung 25 gelöst werden kann.

Die Betätigungsvorrichtung 25 umfasst zumindest eine Steuerfläche 31 zur Bewegung des zumindest einen Axialsicherungselements 23. Bevorzugt ist eine Steuerfläche 31 vorgesehen, über die mehrere Axialsicherungselemente 23 bewegt werden können. Die Steuerfläche 31 ist in bevorzugter Weise entlang der axialen Richtung des Betätigungselements 29 schräg angeordnet, wodurch bei einer axialen Verschiebung des Betätigungselements 29, insbesondere entgegen oder mit der Kraft des elastischen Elements 30, die Steuerfläche 31 die Position des Axialsicherungselements 23 oder der Axialsicherungselemente 23 verändern kann. Gemäß einer bevorzugten Ausführungsform kann die Steuerfläche 31 im Wesentlichen kegelig und insbesondere als Innenkegelring ausgebildet sein. Durch eine Verschiebung des Betätigungselements 29 tritt die als Kegelfläche ausgebildete Steuerfläche 31 in Kontakt mit Abschnitten der Axialsicherungselemente 23, wodurch diese durch die schräge Anordnung der Steuerfläche 31 von ihrer zurückgezogenen Stellung in ihre ausgefahrene Stellung, oder von ihrer ausgefahrenen Stellung in ihre zurückgezogene Stellung bewegt werden können. Zur Verdeutlichung der Funktion der Betätigungsvorrichtung 25 sind die Steuerfläche 31, ein Axialsicherungselement 23 und eine Axialsicherungsöffnung 24 in der Offenstellung und der Geschlossenstellung der Betätigungsvorrichtung 25 vergrößert dargestellt.

In bevorzugter Weise ist ein weiteres elastisches Element 30 vorgesehen, das dazu geeignet und/oder eingerichtet ist, das oder die Axialsicherungselement(e) 23 zu bewegen. So kann die Steuerfläche 31 dazu eingerichtet sein, eine Bewegung der Axialsicherungselemente 23 lediglich in eine Richtung aktiv anzutreiben. Die Rückstellung der Axialsicherungselemente 23 kann beispielsweise über das elastische Element 30 geschehen, das beispielsweise als Druckfeder ausgebildet ist. Bevorzugt drückt das elastische Element 30 das Axialsicherungselement 23 oder die Axialsicherungselemente 23 gegen die Steuerfläche 31 und wirkt dadurch der Steuerung oder der Bewegung durch die Steuerfläche 31 elastisch entgegen. Dadurch kann beispielsweise bewirkt werden, dass die Axialsicherungselemente 23, angetrieben durch das elastische Element 30, selbsttätig in ihre zurückgezogene Stellung zurückkehren, wenn sich die Betätigungsvorrichtung 25 in ihrer Offenstellung befindet.

Fig. 2b zeigt dieselbe Vorrichtung wie Fig. 2a, wobei sich die Wellenverbindungsvorrichtung 21 der Fig. 2b in ihrer Geschlossenstellung befindet. Die Komponenten der Fig. 2b entsprechen den Komponenten der Fig. 2a. Die Welle 6 ist in der Nabe 22 über eine Passung, insbesondere über eine Doppelpassung zentriert. Sowohl der Wellenzapfen als auch eine entfernt vom Wellenzapfen angeordnete Wellenschulter sind über eine entsprechende Passung im Bereich der Nabe zentriert.

Die Figuren 3a bis 3d zeigen unterschiedliche Stellungen einer Wellenverbindungsvorrichtung 21, die insbesondere gemäß Fig. 2a und gemäß Fig. 2b ausgestaltet sein kann. Die Wellenverbindungsvorrichtung 21 umfasst eine Nabe 22 zur Einführung einer nicht dargestellten Welle. Ferner umfasst die Wellenverbindungsvorrichtung 21 eine Betätigungsvorrichtung 25. Die Betätigungsvorrichtung 25 umfasst einen Anschlagkörper 28 und ein Betätigungselement 29. Das Betätigungselement 29 ist gegenüber dem Anschlagkörper 28 bewegbar angeordnet. Ferner umfasst die Betätigungsvorrichtung 25 mindestens eine Rastnase 26 und mindestens zwei Rastausnehmungen 27. Die Rastausnehmungen 27 sind derart ausgebildet, dass die Rastnase 26 wahlweise in eine der Rastausnehmungen 27 eingeführt werden kann. Die Einführ- bzw. Auszugsrichtung verläuft bevorzugt etwa axial. Durch diese Ausgestaltung kann die Rastnase 26 in axialer Richtung aus einer der Rastausnehmungen 27 entfernt werden. Diese Bewegung des Betätigungselements 29 geschieht bevorzugt gegen die Kraft eines elastischen Elements 30. Das elastische Element 30 ist bevorzugt derart vorgespannt, dass das Betätigungselement 29 an den Anschlagkörper 28 gedrückt ist. Insbesondere werden durch das elastische Element 30 die Rastnase 26 in eine der Rastausnehmungen 27 gedrückt. Um die Rastnase 26 von einer Rastausnehmung 27 in die andere zu befördern, weist die Betätigungsvorrichtung 25 und insbesondere das Betätigungselement 29 eine Zwischenstellung auf. In dieser Zwischenstellung ist die Rastnase aus der Rastausnehmung entfernt. Dadurch kann das Betätigungselement 29 in der vorliegenden Ausführungsform gegenüber dem Anschlagkörper 28 verdreht werden. Die Rastausnehmungen 27 sind bevorzugt entlang eines Teilkreises der Drehachse angeordnet, sodass durch Verdrehung des Betätigungselements 29 gegenüber dem Anschlagkörper 28 die Wahl zwischen Offenstellung und Geschlossenstellung erfolgen kann. In allen Ausführungsformen sind die Rastausnehmungen 27 bzw. die Rastnase 26 bevorzugt derart ausgestaltet, dass bei in einer Rastausnehmung 27 eingeführter Rastnase 26 eine Verdrehung bzw. ein Wechsel zwischen Offenstellung und Geschlossenstellung formschlüssig verhindert ist.

Gemäß einer bevorzugten Ausführungsform sind die Rastausnehmungen 27 im Betätigungselement 29 vorgesehen. Gemäß dieser bevorzugten Ausführungsform ist die Rastnase 26 am Anschlagkörper 28 vorgesehen.

Die Rastausnehmungen 27, die einer Rastnase 26 zugeordnet sind, weisen in axialer Richtung eine unterschiedliche Tiefe auf, wodurch die Rastnase 26 in eine Rastausnehmung 27 tiefer eingeführt sein kann als in die andere Rastausnehmung 27. Das Betätigungselement 29 weist dadurch je nachdem in welche der beiden Rastausnehmungen 27 die Rastnase 26 eingeführt ist eine andere axiale Position auf. Dieser Unterschied der axialen Position bewirkt in weiterer Folge, dass sich die Axialsicherungselemente 23, beeinflusst durch die Steuerfläche 31, in ihrer ausgefahrenen Stellung befinden, wenn die Rastnase 26 in einer der Rastausnehmungen angeordnet ist, und dass sich die Axialsicherungselemente 23 in ihrer zurückgezogenen Stellung befinden, wenn die Rastnase 26 in der anderen Rastausnehmung 27 angeordnet ist,

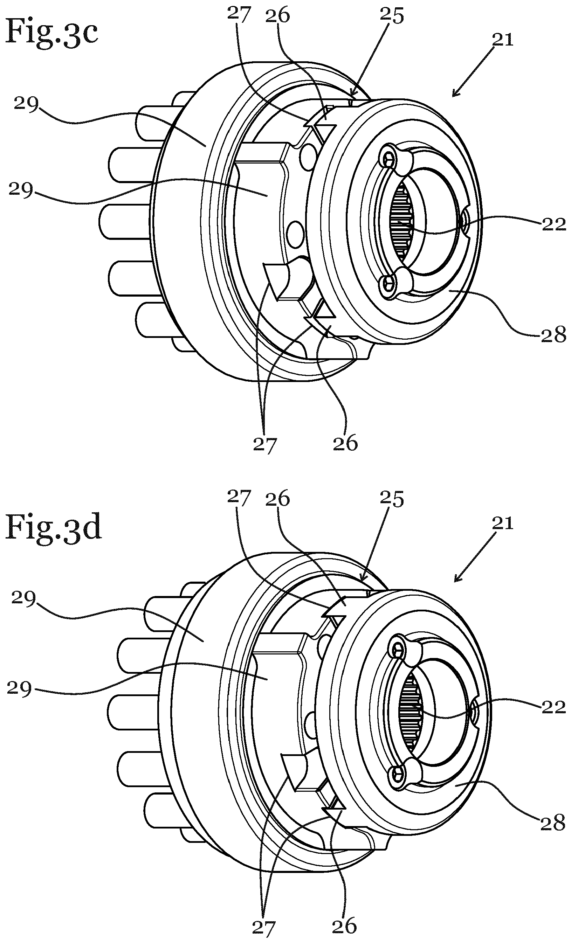

Fig. 3a zeigt die Wellenverbindungsvorrichtung 21, bei der sich die Betätigungsvorrichtung 25 in ihrer Offen-Stellung befindet. Fig. 3b zeigt die Wellenverbindungsvorrichtung 21 bzw. deren Betätigungsvorrichtung 25 in einer Zwischenstellung, in der die Rastnase 26 aus der Rastausnehmung 27 gezogen ist. Diese Trennung erfolgt durch Bewegung des Betätigungselements 29, weg von dem Anschlagkörper 28, und insbesondere gegen die Federkraft des elastischen Elements 30. Fig. 3c zeigt die Wellenverbindungsvorrichtung 21 bzw. die Betätigungsvorrichtung 25 in einer weiteren Zwischenstellung, in der die Rastnase 26 zur zweiten Rastausnehmung 27 verdreht ist. Fig. 3d zeigt die Wellenverbindungsvorrichtung 21 bzw. deren Betätigungsvorrichtung 25, bei der die Rastnase 26 in die andere Rastausnehmung 27 eingeführt ist, sodass sich die Betätigungsvorrichtung 25 in ihrer Geschlossenstellung befindet. Zum Einführen einer Rastnase 26 in eine Rastausnehmung 27 muss die Rastnase 26 bevorzugt fluchtend mit einer der Rastausnehmungen 27 angeordnet sein. Die Stellung der Fig. 3a entspricht gegebenenfalls der Stellung der Fig. 2a. Die Stellung der Fig. 3d entspricht gegebenenfalls der Stellung der Fig. 2b. Die Rastnase 26 bzw. die Rastausnehmungen 27 sind bei der vorliegenden Ausgestaltung außenliegend ausgeführt und können dadurch als Indikator zur Anzeige der Stellung der Betätigungsvorrichtung 25 dienen.

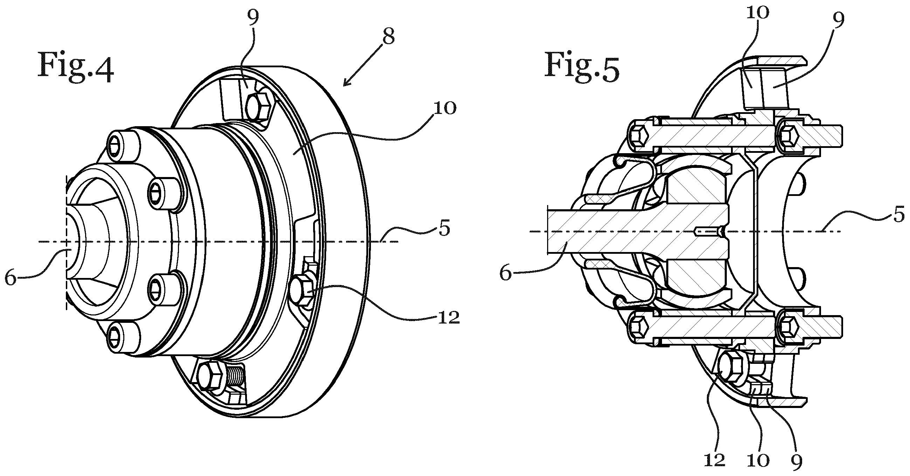

Fig. 4 zeigt eine schematische Schrägansicht eines Teils der Anordnung und insbesondere der Prüflingskupplungsvorrichtung 8. Die Prüflingskupplungsvorrichtung 8 umfasst einen Wellenadapter 10, einen Prüflingsadapter 9 und eine Axialverbindungsvorrichtung 12 zur axialen Verbindung des Wellenadapters 10 mit dem Prüflingsadapter 9. In bevorzugter Weise dient die Axialverbindungsvorrichtung 12 nicht der Übertragung des Drehmoments von der Prüflingsanschlusskomponente 3 des Prüflings 4 auf die Welle 6, sondern lediglich zur axialen Sicherung und zur Verbindung des Prüflingsadapters 9 mit dem Wellenadapter 10. Die Übertragung des Drehmoments erfolgt über Formschlusselemente 11, durch die der Prüflingsadapter 9 mit dem Wellenadapter 10 formschlüssig drehverbunden ist.

Fig. 5 zeigt eine Schnittdarstellung der schematischen Ansicht der Prüflingskupplungsvorrichtung 8 bzw. Teilen der Anordnung der Fig. 4. Die Welle 6 weist an ihrem in der Prüflingskupplungsvorrichtung 8 angeordneten Ende eine flexible Wellenverbindung und insbesondere ein Gleichlaufgelenk auf. Der Prüflingsadapter 9 ist dazu eingerichtet, mit der Prüflingsanschlusskomponente 3 des Prüflings 4 verbunden zu werden. Diese Verbindung geschieht im vorliegenden Fall und bevorzugt in allen Ausführungsformen über eine Schraub- oder Flanschverbindung.

Der Wellenadapter 10 ist im vorliegenden Fall mit dem Gleichlaufgelenk der Welle 6 verbunden. Jedoch kann grundsätzlich jede Verbindung zum Einsatz kommen, die eine Verbindung des Wellenadapters 10 mit der Welle 6 in der vorliegenden Anordnung ermöglicht.

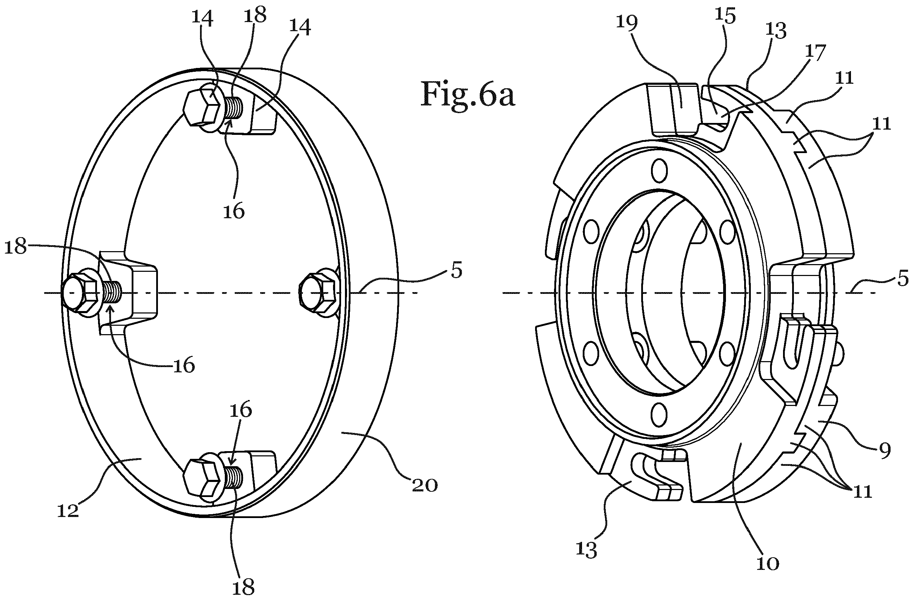

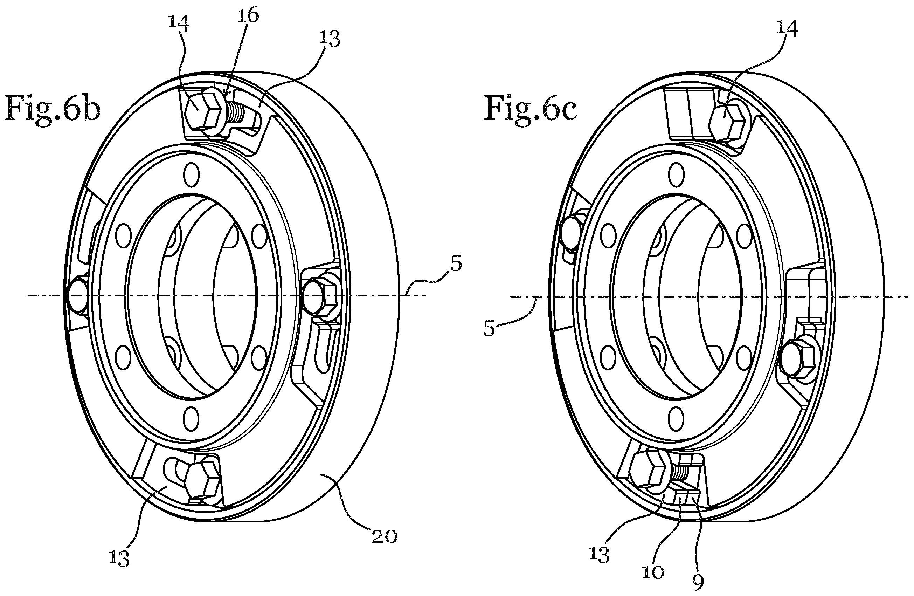

Die Figuren 6a, 6b und 6c zeigen die Funktion der Axialverbindungsvorrichtung 12 zur axialen Verbindung des Prüflingsadapters 9 mit dem Wellenadapter 10. Sowohl der Prüflingsadapter 9 als auch der Wellenadapter 10 umfasst Formschlusselemente 11. Diese Formschlusselemente 11 sind insbesondere an den einander zugewandten Seiten des Wellenadapters 10 und des Prüflingsadapters 9 vorgesehen. Die Formschlusselemente 11 sind insbesondere dazu eingerichtet, eine formschlüssige Drehverbindung zwischen dem Wellenadapter 10 und dem Prüflingsadapter 9 herzustellen. In bevorzugter Weise sind die Formschlusselemente 11 der beiden Adapter 9, 10 in axialer Richtung, also entlang der Drehachse 5 ineinandersteckbar ausgebildet. Die Formschlusselemente 11 sind zur Übertragung und insbesondere zur formschlüssigen Drehübertragung des Drehmoments eingerichtet.

Zur axialen Verbindung und somit zur axialen Sicherung dieser Drehverbindung ist die Axialverbindungsvorrichtung 12 vorgesehen. Der Prüflingsadapter 9 und der Wellenadapter 10 bilden bei hergestellter formschlüssiger Drehverbindung einen Klemmsteg 13. Dieser Klemmsteg 13 wird zwischen zwei Klemmkörpern 14 eingeklemmt, um eine axiale Verbindung des Prüflingsadapters 9 mit dem Wellenadapter 10 herzustellen. In allen Ausführungsformen können ein Abschnitt des Wellenadapters 10 und des Prüflingsadapters 9 parallel entlang des Verlaufs des Klemmstegs 13 und im Wesentlichen quer oder normal zur Klemmkraft der Klemmkörper 14 verlaufen.

Der Prüflingsadapter 9 und der Wellenadapter 10 umfassen bevorzugt in axialer Richtung verlaufende Öffnungen 15, die insbesondere als Durchgangsöffnungen ausgebildet sind. Die Axialverbindungsvorrichtung 12 umfasst Verbindungselemente 16, die durch die Öffnungen 15 hindurchgeführt werden können. Die Verbindungselemente 16 umfassen bevorzugt einen Schaft 18, der durch die Öffnung 15 hindurchragt, um die beiden Klemmkörper 14 derart miteinander zu verbinden, dass diese eine Verklemmung des Klemmstegs bewirken.

Die Öffnungen 15 umfassen jeweils bevorzugt eine Klemmstegfreistellung 17 und eine Einführfreistellung 19. Durch die spezielle Ausgestaltung der Öffnungen 15 und der Axialverbindungsvorrichtung 12 ist eine bajonettartig betätigbare Axialverbindungsvorrichtung 12 gebildet. So können, bei formschlüssig miteinander verbundenem Wellenadapter 10 und Prüflingsadapter 9, die Verbindungselemente 16 im Wesentlichen in axialer Richtung durch die Öffnungen 15 und insbesondere durch die Einführfreistellung 19 der Öffnung 15 eingeführt werden. In dieser Stellung kann dann das Verbindungselement 16 über eine Drehbewegung in die Klemmstegfreistellung 17 bewegt werden. Der Schaft 18 des Verbindungselements 16 ist dabei derart ausgestaltet, dass er in die Klemmstegfreistellung 17 passt. Die Klemmelemente 14 hingegen überragen die Klemmstegfreistellung und erstrecken sich bis zum Klemmsteg 13, sodass dieser zwischen den Klemmelementen 14 eingeklemmt werden kann.

Fig. 6b zeigt eine Stellung, in der die Verbindungselemente 16 in die Einführfreistellung 19 eingeführt sind. Fig. 6c zeigt eine Stellung, in der die Verbindungselemente 16 über eine Drehbewegung in die Klemmstegfreistellungen 17 eingeführt sind.

Zur Herstellung der axialen Verbindung des Prüflingsadapters 9 mit dem Wellenadapter 10 müssen bei der vorliegenden Ausführungsform lediglich vier Schrauben festgezogen werden. Anzumerken ist, dass diese Schrauben nicht zur Übertragung des Drehmoments, sondern rein zur Axialsicherung eingerichtet sind.

In der vorliegenden Ausführungsform umfassen die Verbindungselemente 16 zwei Klemmkörper 14, wobei ein Klemmkörper 14 als Schraubenkopf bzw. als Schraubenmutter und das andere Klemmelement 14 als Lasche oder Steg ausgebildet ist. Bevorzugt sind mehrere Verbindungselemente 16 über einen Bajonettring 20 miteinander verbunden. Insbesondere sind die Verbindungselemente 16 derart entlang des Verlaufs des Bajonettrings 20 angeordnet, dass sie in die Öffnungen 15 der Adapter 9, 10 eingeführt werden können. Bevorzugt sind die als Stege oder Laschen ausgeführten Klemmkörper 14 mit dem Bajonettring verbunden, und gegebenenfalls einstückig verbunden. Bevorzugt ragen die als Stege oder Laschen ausgeführten Klemmkörper vom Bajonettring 20 nach innen.

Gemäß einer bevorzugten Ausführungsform ist der Klemmsteg 13, wie insbesondere in den Figuren 6 dargestellt ist, im Wesentlichen C-förmig ausgebildet, wobei die Schenkel des Klemmstegs 13 im Wesentlichen entlang einem Teilkreis um die Drehachse 5 verlaufen. Der C-förmige Klemmsteg 13 weist eine Öffnung 15 auf, die insbesondere durch die Klemmstegfreistellung 17 gebildet ist. Die Klemmstegfreistellung 17 ist im Wesentlichen langlochförmig und/oder einem Teilkreis um die Drehachse 5 folgend ausgebildet. Die Klemmstegfreistellung 17 mündet in die Einführfreistellung 19 der Öffnung 15, wodurch ein durch die Einführfreistellung 19 eingeführtes Verbindungselement 16 in weiterer Folge in die Klemmstegfreistellung 17 eingeführt werden kann. Gegebenenfalls können die Formschlusselemente 11, bzw. deren formschlüssig wirkenden Flanken, zwischen den Öffnungen 15 vorgesehen sein. Gegebenenfalls sind lediglich eine Öffnung 15 und ein Verbindungselement 16 vorgesehen. Gegebenenfalls sind zwei, drei, vier, fünf oder mehr Verbindungselemente 16 mit entsprechend angeordneten Öffnungen 15 vorgesehen.

Gemäß einer bevorzugten Ausführungsform umfasst die Anordnung eine Prüflingskupplungsvorrichtung 8, die gemäß einer der Figuren 4, 5 oder 6 ausgebildet ist. Bevorzugt umfasst diese Anordnung eine Belastungsmaschinenkupplungsvorrichtung, die gemäß einer der Figuren 2 oder 3 ausgebildet ist.

## Patentansprüche

1. Wellenverbindungsvorrichtung (21) zur formschlüssigen Drehverbindung einer Nabe (22) mit einer Welle (6),
- wobei die Wellenverbindungsvorrichtung (21) eine formschlüssig wirkende Welle-Nabe-Verbindung umfasst,
- wobei die Welle-Nabe-Verbindung einen axialen Freiheitsgrad zum Einführen eines Wellenabschnitts der Welle (6) in die Nabe (22) und zum Entfernen des Wellenabschnitts der Welle (6) aus der Nabe (22) aufweist,
- wobei die Wellenverbindungsvorrichtung (21) mindestens ein Axialsicherungselement (23) zur axialen Sicherung der Welle-Nabe-Verbindung umfasst,
- wobei das Axialsicherungselement (23) eine ausgefahrene Stellung aufweist, in der es in eine Axialsicherungsöffnung (24) ragt, wodurch der axiale Freiheitsgrad der Welle-Nabe-Verbindung gesperrt ist,
- und wobei das Axialsicherungselement (23) eine zurückgezogene Stellung aufweist, in der der axiale Freiheitsgrad der Welle-Nabe-Verbindung freigegeben ist,
wobei die Wellenverbindungsvorrichtung (21) eine Betätigungsvorrichtung (25) zur Betätigung des Axialsicherungselements (23) umfasst,
wobei die Betätigungsvorrichtung (25) in einer Offenstellung verrastbar ist, in der das Axialsicherungselement (23) in seine zurückgezogene Stellung bringbar oder gebracht ist,
und wobei die Betätigungsvorrichtung (25) in einer Geschlossenstellung verrastbar ist, in der das Axialsicherungselement (23) in seine ausgefahrene Stellung bringbar oder gebracht ist,
**dadurch gekennzeichnet, dass** die Betätigungsvorrichtung (25)
- mindestens eine Rastnase (26),
- mindesten zwei Rastausnehmungen (27),
- einen starr mit der Nabe verbundenen Anschlagkörper (28),
- und ein gegenüber dem Anschlagkörper (28) bewegbares und durch Einführen der Rastnase (26) in eine der Rastausnehmung (27) gegenüber dem Anschlagkörper (28) verrastbares Betätigungselement (29) umfasst,
wobei die Betätigungsvorrichtung (25) in ihrer Offenstellung verrastet ist, wenn die Rastnase (26) in einer der beiden zugeordneten Rastausnehmungen (27) angeordnet ist,
und wobei die Betätigungsvorrichtung (25) in ihrer Geschlossenstellung verrastet ist, wenn die Rastnase (26) in der anderen der beiden zugeordneten Rastausnehmungen (27) angeordnet ist.

2. Wellenverbindungsvorrichtung (21) nach Anspruch 1,
**dadurch gekennzeichnet, dass**
die Rastnase (26) und die Rastausnehmungen (27) im Wesentlichen entlang einer axialer Richtung verlaufen, und dass, wenn die Rastnase (26) in eine der Rastausnehmungen (27) eingeführt ist, das Betätigungselement (29) und der Anschlagkörper (28) einen axialen Freiheitsgrad gegenübereinander aufweisen, aber eine Verdrehung des Betätigungselements (29) gegenüber dem Anschlagkörper (28) im Wesentlichen gehemmt, insbesondere formschlüssig gehemmt ist.

3. Wellenverbindungsvorrichtung (21) nach Anspruch 1 oder 2,
**dadurch gekennzeichnet,**
- **dass** die Betätigungsvorrichtung (25) zum Wechsel zwischen der Offenstellung und der Geschlossenstellung eine Zwischenstellung aufweist, in der die Rastnase (26) außerhalb der Rastausnehmungen (27) angeordnet ist,
- **dass** das Betätigungselement (29) in der Zwischenstellung gegenüber dem Anschlagkörper (28) einen Drehfreiheitsgrad aufweist,
- und **dass** die Rastnase (26) zur Verrastung der Betätigungsvorrichtung (25) in der Offenstellung oder in der Geschlossenstellung wahlweise in eine der zugeordneten Rastausnehmungen (27) einführbar oder eingeführt ist.

4. Wellenverbindungsvorrichtung (21) nach einem der Ansprüche 1 bis 3,
**dadurch gekennzeichnet, dass**
die Betätigungsvorrichtung (25) ein axial wirkendes elastisches Element (30), wie insbesondere eine Druckfeder aufweist, dessen Kraft das Betätigungselement (29) gegen den Anschlagkörper (28) und gegebenenfalls die Rastnase (26) in eine Rastausnehmung (27) drückt und dessen Kraft einer Bewegung des Betätigungselements (29) von einer verrasteten Stellung in die Zwischenstellung entgegenwirkt.

5. Wellenverbindungsvorrichtung (21) nach einem der Ansprüche 1 bis 4,
**dadurch gekennzeichnet, dass**
die Betätigungsvorrichtung (25) mindestens eine Steuerfläche (31) zur Bewegung des Axialsicherungselements (23) von seiner zurückgezogenen Stellung in die ausgefahrene Stellung durch Bewegung der Betätigungsvorrichtung (25) von der Offenstellung in die Geschlossenstellung aufweist.

6. Wellenverbindungsvorrichtung (21) nach Anspruch 5,
**dadurch gekennzeichnet, dass**
die Steuerfläche (31) am Betätigungselement (29) vorgesehen ist,
dass die Steuerfläche (31) entlang der axialen Richtung schräg nach innen verläuft und insbesondere der Form eines Innenkegelrings entspricht,
und dass sich das Axialsicherungselement (23) je nach axialer Position des Betätigungselements (29) in seiner ausgefahrenen Stellung oder in seiner zurückgezogenen Stellung befindet.

7. Wellenverbindungsvorrichtung (21) nach einem der Ansprüche 1 bis 6,
**dadurch gekennzeichnet, dass**
die Rastausnehmungen (27) beabstandet voneinander entlang des Drehfreiheitsgrades des Betätigungselements (29) angeordnet sind, und/oder dass eine Rastausnehmung (27) entlang der axialen Richtung tiefer ausgebildet ist als eine andere Rastausnehmung (27).

8. Wellenverbindungsvorrichtung (21) nach einem der Ansprüche 1 bis 7,
**dadurch gekennzeichnet, dass**
mehrere Axialsicherungselemente (23) in radialer Richtung in der Nabe (22) oder jeweils in einer in der Nabe (22) angeordneten Gleitbuchse geführt angeordnet sind und in ihrer ausgefahrenen Stellung von der Nabe (22) radial nach innen, und zur axialen Sicherung in eine in der Welle (6) vorgesehene ringnutförmige Axialsicherungsöffnung (24) oder in mehrere Axialsicherungsöffnungen (24) ragen.

9. Anordnung zur Drehverbindung der Belastungsmaschinenanschlusskomponente (1) einer Belastungsmaschine (2) mit der Prüflingsanschlusskomponente (3) eines Prüflings (4), umfassend:
- mindestens eine entlang der Drehachse der Drehverbindung verlaufende Welle (6),
- eine zwischen der Welle (6) und der Belastungsmaschinenanschlusskomponente (1) der Belastungsmaschine (2) angeordnete Belastungsmaschinenkupplungsvorrichtung (7) zur Drehverbindung der Welle (6) mit der Belastungsmaschinenanschlusskomponente (1),
- eine zwischen der Welle (6) und der Prüflingsanschlusskomponente (3) des Prüflings (4) vorgesehene Prüflingskupplungsvorrichtung (8) zur Drehverbindung der Welle (6) mit der Prüflingsanschlusskomponente (3),
**dadurch gekennzeichnet, dass**
die Belastungsmaschinenkupplungsvorrichtung (7) und/oder gegebenenfalls die Prüflingskupplungsvorrichtung (8) zur formschlüssigen Drehverbindung mit der Welle (6) eine Wellenverbindungsvorrichtung (21) nach einem der Ansprüche 1 bis 8 umfasst.

10. Anordnung nach Anspruch 9,
**dadurch gekennzeichnet,**
- **dass** die Belastungsmaschinenkupplungsvorrichtung (7) eine elastische Kupplung (32) umfasst,
- oder dass die Belastungsmaschinenkupplungsvorrichtung (7) eine entlang des Kraftflusses des Messstrangs zwischen der Nabe (22) und der Belastungsmaschinenanschlusskomponente (1) der Belastungsmaschine (2) angeordnete elastische Kupplung (32) umfasst.

11. Anordnung nach Anspruch 9 oder 10 **dadurch gekennzeichnet, dass** die Welle-Nabe-Verbindung als Kerbverzahnung, Keilwellenverbindung oder Zahnwellenverbindung ausgebildet ist.

12. Anordnung nach einem der Ansprüche 9 bis 11,
**dadurch gekennzeichnet, dass**
die Welle (6) in der Nabe (22) über eine Passung, insbesondere über eine Doppelpassung axial zentriert ist,
und insbesondere dass sowohl der Wellenzapfen der Welle (6) als auch eine entfernt vom Wellenzapfen angeordnete Wellenschulter über eine entsprechende Passung im Bereich der Nabe (22) zentriert sind,
oder dass die Welle (6) beidseitig der Welle-Nabe-Verbindung zentriert ist.

13. Anordnung nach einem der Ansprüche 9 bis 12,
**dadurch gekennzeichnet,**
- **dass** die Prüflingskupplungsvorrichtung (8) mindestens einen mit der Prüflingsanschlusskomponente (3) eines Prüflings (4) verbindbaren oder verbundenen Prüflingsadapter (9) und einen mit der Welle (6) verbindbaren oder verbundenen Wellenadapter (10) umfasst,
- **dass** der Prüflingsadapter (9) und der Wellenadapter (10) Formschlusselemente (11) zur lösbaren und formschlüssigen Drehverbindung des Prüflingsadapters (9) mit dem Wellenadapter (10) umfassen,
- und **dass** eine Axialverbindungsvorrichtung (12) zur axialen Verbindung des Prüflingsadapters (9) mit dem Wellenadapter (10) vorgesehen ist.

14. System umfassend eine Anordnung nach einem der Ansprüche 9 bis 13,
**dadurch gekennzeichnet, dass**
mehrere Wellen (6) mit unterschiedlichen Steifigkeiten vorgesehen oder bereitgestellt sind, die zur Veränderung der Steifigkeit des Messstranges der Anordnung wahlweise zur Verbindung der Belastungsmaschinenkupplungsvorrichtung (7) mit der Prüflingskupplungsvorrichtung (8) einsetzbar sind.

## Claims

1. A shaft connecting device (21) for a form-fitting rotational connection of a hub (22) with a shaft (6),
- wherein the shaft connecting device (21) comprises a form-fitting shaft-hub connection,
- wherein the shaft-hub connection has an axial degree of freedom for inserting a shaft section of the shaft (6) into the hub (22) and for removing the shaft section of the shaft (6) from the hub (22),
- wherein the shaft connecting device (21) has at least one axial securing element (23) for axially securing the shaft-hub connection,
- wherein the axial securing element (23) has an extended position in which it protrudes into an axial securing opening (24), whereby the axial degree of freedom of the shaft-hub connection is blocked,
- and wherein the axial securing element (23) has a retracted position in which the axial degree of freedom of the shaft-hub connection is released,
- wherein the shaft connecting device (21) comprises an actuating device (25) for actuating the axial securing element (23),
- wherein the actuating device (25) can be latched in an open position in which the axial securing element (23) can be moved or is moved into its retracted position,
- and wherein the actuating device (25) can be latched in a closed position, in which the axial securing element (23) can be moved or is moved into its extended position.
**characterized in that**
the actuating device (25) comprises
- at least one latching nose (26),
- at least two latching recesses (27),
- an abutment body (28) rigidly connected with the hub,
- and an actuating element (29) movable with respect to the abutment body (28) and adapted to be latched relative to the abutment body (28) by inserting the latching nose (26) into one of the latching recesses (27),
wherein the actuating device (25) is latched in its open position when the latching nose (26) is arranged in one of the two associated latching recesses (27),
and wherein the actuating device (25) is latched in its closed position, when the latching nose (26) is arranged in the other of the two associated recesses (27).

2. Shaft connection device (21) according to claim 1, **characterized in that** the latching nose (26) and the latching recesses (27) substantially extend along an axial direction, and that, when the latching nose (26) is inserted in one of the latching recesses (27), the actuating element (29) and the abutment body (28) have an axial degree of freedom relative to each other, whereas a rotation of the actuating element (29) relative to the abutment body (28) is substantially inhibited, in particular form-fittingly restrained.

3. Shaft connection device (21) according to claim 1 or 2, **characterized in that**
- the actuating device (25) has an intermediate position for changing between the open position and the closed position, in which intermediate position the latching nose (26) is arranged outside the latching recesses (27),
- in the intermediate position, the actuating element (29) has a rotational degree of freedom relative to the abutment body (28),
- and that the latching nose (26) is insertable or is introduced optionally in one of the associated recesses (27) to latch the actuating device (25) in the open position or in the closed position.

4. Shaft connection device (21) according to any one of claims 1 to 3, **characterized in that** the actuating device (25) has an axially acting elastic element (30), such as in particular a compression spring whose force presses the actuating element (29) against the abutment body (28) and optionally the latching nose (26) into a latching recess (27) and whose force counteracts a movement of the actuating element (29) from a latched position into the intermediate position.

5. A shaft connecting device (21) according to any one of claims 1 to 4, **characterized in that** the actuating device (25) comprises at least one control surface (31) for moving the axial securing element (23) from its retracted position to the extended position by movement of the actuating device (25) from the open position to the closed position.

6. A shaft connecting device (21) according to claim 5, **characterized in that** the control surface (31) is provided on the actuating element (29),
that the control surface (31) extends obliquely inward along the axial direction and in particular corresponds to the shape of an inner cone ring,
and that, depending on the axial position of the actuating element (29), the axial securing element (23) is in its extended position or in its retracted position.

7. Shaft connection device (21) according to one of claims 1 to 6, **characterized in that** the latching recesses (27) are spaced from each other along the rotational degree of freedom of the actuating element (29)
and/or that one latching recess (27) is deeper along the axial direction than another latching recess (27).

8. Shaft connection device (21) according to any one of claims 1 to 7, **characterized in that** a plurality of axial securing elements (23) are arranged in the radial direction in the hub (22) or are respectively arranged in a sliding bushing arranged in the hub (22) and, in the extended position, protrude radially inward from the hub (22) and, for axial securing, protrude into an annular groove-shaped axial securing opening (24) or into a plurality of axial securing openings (24) provided in the shaft (6).

9. Arrangement for the rotational connection of the load machine connection component (1) of a load machine (2) with the test object connection component (3) of a test object (4), comprising:
- at least one shaft (6) extending along the axis of rotation of the rotary connection,
- a load machine coupling device (7) arranged between the shaft (6) and the load machine connection component (1) of the load machine (2), said device being provided for rotatably connecting the shaft (6) with the load machine connection component (1),
- a test object coupling component (8) arranged between the shaft (6) and the test object connection component (3) of the test object (4), said coupling component being provided for rotational connection of the shaft (6) with the test object connection component (3),
**characterized in that**
the load machine coupling device (7) and/or optionally the test object coupling component (8) comprise a shaft connecting device (21) of one of claims 1 to 8 for the form-fitting rotational connection with the shaft (6).

10. Arrangement according to claim 9, **characterized in**
- **that** the load machine coupling device (7) comprises an elastic coupling (32),
- or that the load machine coupling device (7) comprises an elastic coupling (32) arranged along the force flow of the measuring strand between the hub (22) and the load machine connection component (1) of the load machine (2).

11. Arrangement according to claim 9 or 10, **characterized in that** the shaft-hub connection is designed as a serration, spline connection or toothed shaft connection.

12. Arrangement according to one of claims 9 to 11, **characterized in that** the shaft (6) is axially centered in the hub (22) via a fit, in particular via a double fit, and in particular that both the shaft stub of the shaft (6) and a shaft shoulder arranged remotely from the shaft stub are centered by a corresponding fit in the region of the hub (22), or that the shaft (6) is centered on both sides of the shaft-hub connection.

13. Arrangement according to one of claims 9 to 12, **characterized in that**
- the test object coupling component (8) comprises at least one test object adapter (9) connectable or connected with the test object connection component (3) of the test object (4) and comprises a shaft adapter (10) connectable or connected with the shaft (6),
- that the test object adapter (9) and the shaft adapter (10) comprise form-fitting elements (11) for a releasable and form-fitting rotational connection of the test object adapter (9) with the shaft adapter (10),
- and that an axial connection device (12) is provided for an axial connection of the test object adapter (9) with the shaft adapter (10).

14. System comprising an arrangement according to one of claims 9 to 13, **characterized in that** a plurality of shafts (6) with different stiffnesses are arranged or provided, which can be used to modify the rigidity of the measuring strand of the arrangement selectively for connection of the load machine coupling device (7) with the test object coupling device (8).

## Revendications

1. Dispositif de connexion d'arbre (21) pour la connexion en rotation positive d'un moyeu (22) avec un arbre (6),
- le dispositif de connexion d'arbre (21) comprenant une connexion arbre-moyeu à effet positif,
- la liaison arbre-moyeu présentant un degré de liberté axial pour insérer une section de l'arbre (6) dans le moyeu (22) et pour retirer la section de l'arbre (6) du moyeu (22),
- le dispositif de liaison d'arbre (21) comprenant au moins un élément de fixation axiale (23) pour fixer axialement la liaison arbre-moyeu,
- ledit élément de fixation axiale (23) ayant une position étendue dans laquelle il saille dans une ouverture de fixation axiale (24), le degré de liberté axiale de la liaison arbre-moyeu étant ainsi bloqué,
- et l'élément de fixation axiale (23) ayant une position retirée dans laquelle le degré de liberté axiale de la liaison arbre-moyeu est libéré,
- le dispositif de connexion d'arbre (21) comprenant un dispositif actionneur (25) pour actionner l'élément de fixation axiale (23),
- le dispositif actionneur (25) pouvant être verrouillé dans une position ouverte, dans laquelle l'élément de fixation axiale (23) peut être amené ou est amené dans sa position retirée,
- et le dispositif actionneur (25) pouvant être verrouillé dans une position fermée, dans laquelle l'élément de fixation axiale (23) peut être amené ou est amené dans sa position étendue,
**caractérisé en ce que**
le dispositif actionneur (25) comprend
- au moins un nez de verrouillage (26),
- au moins deux évidements de verrouillage (27),
- un corps de butée (28) rigidement connecté au moyeu,
- et un élément actionneur (29) déplaçable par rapport au corps de butée (28) et verrouillable par rapport au corps de butée (28) par insertion du nez de verrouillage (26) dans un des évidements de verrouillage (27),
ledit dispositif actionneur (25) étant verrouillé dans sa position ouverte lorsque le nez de verrouillage (26) est disposé dans l'un des deux évidements (27) associés,
et le dispositif actionneur (25) est verrouillé dans sa position fermée, lorsque le nez de verrouillage (26) est agencé dans l'autre des deux évidements de verrouillage (27) associés.

2. Dispositif de liaison d'arbre (21) selon la revendication 1, **caractérisé en ce que** le nez de verrouillage (26) et les évidements de verrouillage (27) s'étendent sensiblement dans une direction axiale, et lorsque le nez de verrouillage (26) est insérée dans l'un des évidements de verrouillage (27), l'élément actionneur (29) et le corps de butée (28) ont un degré de liberté axiale l'un par rapport à l'autre, alors qu'une rotation de l'élément actionneur (29) par rapport au corps de butée (28) est sensiblement arrêtée, en particulier bloquée de manière positive.

3. Dispositif de liaison d'arbre (21) selon la revendication 1 ou 2, **caractérisé en ce que**
- pour passer de la position ouverte à la position fermée. le dispositif actionneur (25) présente une position intermédiaire dans laquelle le nez de verrouillage (26) est agencé à l'extérieur des évidements de verrouillage (27),
- dans la position intermédiaire, l'élément actionneur (29) a un degré de liberté de rotation par rapport au corps de butée (28),
- et que pour verrouiller le dispositif actionneur (25) en position ouverte ou fermée, le nez de verrouillage (26) est sélectivement insérable ou inséré dans l'un des évidements (27) associés.

4. Dispositif de liaison d'arbre (21) selon l'une quelconque des revendications 1 à 3, **caractérisé en ce que** le dispositif actionneur (25) présente un élément élastique (30) à action axiale, tel que notamment un ressort de compression, dont la force pousse l'élément actionneur (29) contre le corps de butée (28) et, éventuellement, le nez de verrouillage (26) dans un évidement de verrouillage (27), et dont la force s'oppose à un mouvement de l'élément actionneur (29) depuis une position de verrouillage à la position intermédiaire.

5. Dispositif de liaison d'arbre (21) selon l'une quelconque des revendications 1 à 4, **caractérisé en ce que** le dispositif actionneur (25) comprend au moins une surface de commande (31) pour déplacer l'élément de fixation axiale (23) depuis sa position retirée à la position étendue par le mouvement du dispositif actionneur (25) depuis la position ouverte à la position fermée.

6. Dispositif de liaison d'arbre (21) selon l'une quelconque des revendications 5, **caractérisé en ce que** la surface de commande (31) est prévue sur l'élément actionneur (29),
**que** la surface de commande (31) s'étend obliquement vers l'intérieur dans la direction axiale et correspond notamment à la forme d'un anneau conique interne,
et qu'en fonction de la position axiale de l'élément actionneur (29), l'élément de fixation axiale (23) est dans sa position étendue ou dans sa position retirée.

7. Dispositif de liaison d'arbre (21) selon l'une des revendications 1 à 6, **caractérisé en ce que** les évidements de verrouillage (27) sont espacés les uns des autres le long du degré de liberté en rotation de l'élément actionneur (29),
et/ou qu'un évidement de verrouillage (27) est formé plus profondément dans la direction axiale qu'un autre évidement de verrouillage (27).

8. Dispositif de liaison d'arbre (21) selon l'une quelconque des revendications 1 à 7, **caractérisé en ce que** plusieurs éléments de fixation axiale (23) sont disposés dans la direction radiale dans le moyeu (22) ou, respectivement, disposés de manière guidée dans une bague de glissement disposée dans le moyeu (22), et qui saillent, dans leur position étendue, radialement vers l'intérieur depuis le moyeu (22) et, pour la fixation axiale, saillent dans une ouverture de fixation axiale (24) en forme de rainure annulaire prévue dans l'arbre (6), ou dans plusieurs ouvertures de fixation axiale (24).

9. Agencement pour la liaison en rotation du composant de connexion d'une machine de charge (1) d'une machine de charge (2) avec le composant de connexion d'un objet à tester (3) d'un objet à tester (4), comprenant:
- au moins un arbre (6) s'étendant le long de l'axe de rotation de la liaison en rotation,
- un dispositif d'accouplement de machine de charge (7) disposé entre l'arbre (6) et le composant de connexion de la machine de charge (1) de la machine de charge (2) pour la liaison en rotative de l'arbre (6) au composant de connexion d'une machine de charge (1),
- un dispositif d'accouplement d'un objet à tester (8) disposé entre l'arbre (6) et le composant de connexion d'un objet à tester (3) d'un objet à tester (4) pour la liaison en rotation de l'arbre (6) avec le composant de connexion d'un objet à tester (3),
**caractérisé en ce que**
le dispositif d'accouplement de la machine de charge (7) et/ou éventuellement le dispositif d'accouplement d'un objet à tester (8) comprend un dispositif de liaison d'arbre (21) selon l'une quelconque des revendications 1 à 8 pour une liaison en rotation positive avec l'arbre (6).

10. Agencement selon la revendication 9, **caractérisé en ce que**
- le dispositif d'accouplement de la machine de charge (7) comprend un accouplement (32) élastique,
- ou que le dispositif d'accouplement de la machine de chargement (7) comprend un accouplement (32) élastique disposé le long du flux de force de la chaîne de mesure entre le moyeu (22) et le composant de connexion de la machine de charge (1) de la machine de charge (2).

11. Agencement selon la revendication 9 ou 10, **caractérisé en ce que** la liaison arbre-moyeu est conçue sous forme de liaison dentelée, cannelée ou dentée.

12. Agencement selon l'une des revendications 9 à 11, **caractérisé en ce que** l'arbre (6) est centré axialement dans le moyeu (22) par un ajustement, en particulier par un ajustement double,
et en particulier que le tourillon d'arbre de l'arbre (6) ainsi qu'un épaulement d'arbre disposé loin du tourillon d'arbre sont centrés par un ajustement correspondant dans la région du moyeu (22),
ou que l'arbre (6) est centré des deux côtés de la connexion arbre-moyeu.

13. Arrangement selon l'une des revendications 9 à 12, **caractérisé en ce que**
- le dispositif d'accouplement d'un objet à tester (8) comprend au moins un adaptateur de l'objet à tester (9) connectable ou connecté avec le composant de connexion d'un objet à tester (3) d'un objet à tester (4), et comprend un adaptateur d'arbre (10) connectable ou connecté avec l'arbre (6),
- l'adaptateur de l'objet de test (9) et l'adaptateur d'arbre (10) comprennent des éléments de liaison positive (11) pour une liaison rotative amovible et positive de l'adaptateur de l'objet de test (9) avec l'adaptateur d'arbre (10),
- et un dispositif de fixation axiale (12) est prévu pour une liaison axiale des adaptateurs de l'objet à tester (9) avec l'adaptateur d'arbre (10).

14. Système comprenant un agencement selon l'une des revendications 9 à 13, **caractérisé en ce que** plusieurs arbres (6) sont prévus ou sont dotés de raideurs différentes, qui sont utilisées sélectivement pour modifier la rigidité de la chaîne de mesure de l'agencement en vue de la connexion du dispositif d'accouplement de la machine de charge (7) avec dispositif d'accouplement d'un objet à tester (8).
